# EUROPEAN PATENT APPLICATION

(11) **EP 2 897 090 A1**
(43) Date of publication of application: **22.07.2015**
(21) Application number: 14151832.4
(22) Date of filing: 20.01.2014
(51) Int. Cl.: G06Q 10/06, G06Q 10/10, G06Q 30/02

(54) **Investigative monitoring apparatus**

(71) Applicant: S Three Management Services Limited, London W1W 5PN (GB)
(72) Inventor: Cook, Matthew, London KT1 2UA (GB); Baillie, Robert, London NW10 2RN (GB); Steer, James, London SW20 9AT (GB)
(74) Representative: Robinson, Simon John

(57) **Abstract**

An investigative monitoring apparatus (1) for determining deduced changes in status of role opportunities, the apparatus comprising a data processor and a communications interface (5) arranged to send and receive emails, the data processor configured to monitor stored role candidates' details for a first criterion of an indication of a paucity of recorded recruitment activity updates of the candidates since a date of interview and the data processor arranged to monitor for a second criterion of a change relating to stored details of role opportunities indicative of one or more of said role opportunities ceasing to be open, and the data processor arranged to identify any such candidates and role opportunities which meet the first and second criteria, and the data processor arranged to generate for each such candidate an inferred email address which is in conformity with an email address syntax of a client party which interviewed the or each candidate, and the data processor arranged to send a test email using an email address so generated to said client party from the interface, and the data processor arranged to monitor for a response from the test email.

## Description

### Technical field

The present invention relates generally to monitoring apparatus, and in particular to investigative monitoring apparatus.

### Background

Businesses, and specifically recruitment agencies, derive a revenue from the successful introduction of candidates to clients offering a role opportunity. On occasion, however, after a candidate is introduced to a client (either following an interview arranged by the company or on receipt of a candidate CV), it has been known to an attempt to bypass the agency as an intermediary and engage the candidate directly without paying a fee to the agency.

We have devised an apparatus to monitor for potential breaches of the terms of an introduction of a candidate to a client party. Broadly, the invention may be considered as a monitoring apparatus to detect and identify placements which constitute a potential breach of agreed terms, and the apparatus configured to implement a process to identify potential breaches; a process to predict the email address of a specific candidate joining a specific company; a process to output test emails to those addresses; and a means of monitoring the response from said emails.

### Summary

According to the invention there is provided an investigative monitoring apparatus for determining deduced changes in status of role opportunities, the apparatus comprising a data processor and a communications interface arranged to send and receive emails, the data processor configured to monitor stored role candidates' details for a first criterion of an indication of a paucity, such as a total or partial absence or cessation of recorded recruitment activity updates of the candidates since a date of interview and the data processor arranged to monitor for a second criterion of a change relating to stored details of role opportunities indicative of one or more of said role opportunities ceasing to be open, and the data processor arranged to identify any such candidates and role opportunities which meet the first and second criteria, and the data processor arranged to generate for each such candidate an inferred email address which is in conformity with an email address syntax of a client party which interviewed the or each candidate, and the data processor arranged to send a test email using an email address so generated to said client party from the interface, and the data processor arranged to monitor for a response from the test email.

The apparatus may be considered as an investigative tool to identify potentially placed job candidates who have been placed in a role in breach of terms of conditions. In one embodiment of the invention, a processor is provided with connection to databases and to an email interface, conveniently and advantageously allowing test emails to be both generated and responses therefrom to be monitored and analysed.

Another aspect of the invention relates to a computer network which comprises the apparatus of the first aspect of the invention and one or more databases.

According to another aspect of the invention there are provided machine-readable and executable instructions. The instructions may be realised as a software product.

The monitoring apparatus may comprise any feature described in the description and/or shown in the drawings.

### Brief Description of the drawings

Various embodiments of the invention will now be described, by way of example only, with reference to the following drawings in which:
**Figure 1** is schematic view of a network comprising a monitoring apparatus, and
**Figure 2** is a flow diagram showing the sequence of steps implemented by the monitoring apparatus.

### Detailed Description

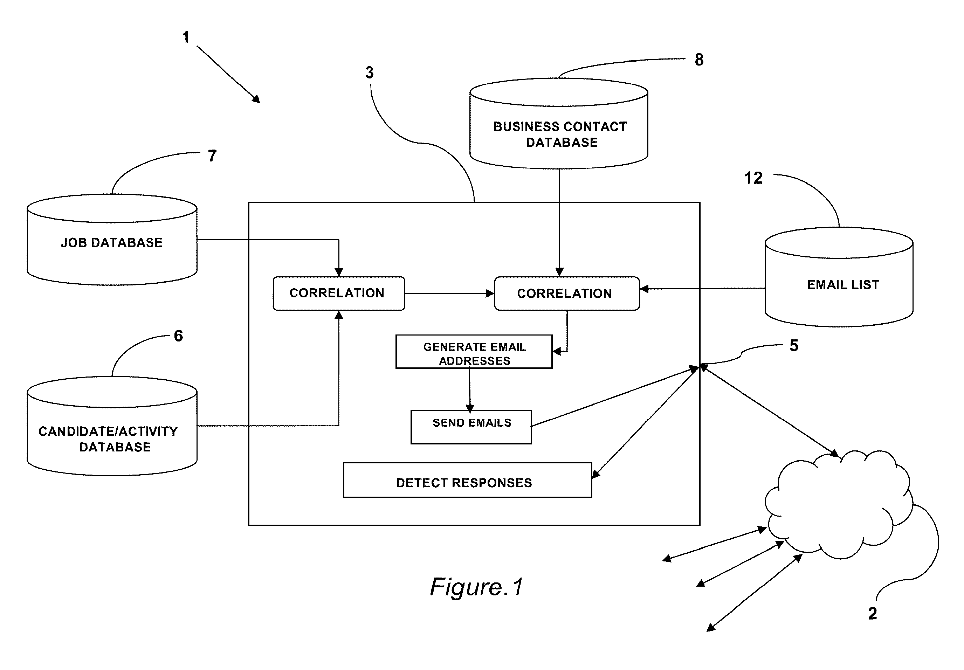

Reference is made initially to Figure 1 which shows a monitoring apparatus 1 which comprises a data processor 3 which executes machine-readable instructions stored within a memory of the apparatus. The apparatus further comprises a communications interface 5 to enable the apparatus to send and receive emails to and from recipients external of the apparatus over a communications network 2, such as the internet. The apparatus 1 forms part of a computer system comprising databases 6, 7 and 8, which respectively relate to a candidate activity database 6, a job/role database 7 and a business/contact database 8.

The job database 7 includes job orders that have been closed (i.e. the roles are no longer (showing as) available after an interview of a candidate introduced by the recruitment company, but on the database are not indicated as having been filled by the intermediary party, in particular a recruitment company, which made the introduction between a candidate and the client party which offered the role opportunity. The database 7 includes job references and client references associated with those job references.

The candidate and activity database 6 includes a list of candidates for whom recruitment activity has stopped. In particular there are no recorded updates relating to those candidates since interviews took place. The database may include a date on which respective interviews took place, and the data processor 3 determines whether a time period in excess of a predetermined threshold has elapsed since there being no activity (or insufficient activity) from an interview date. The database includes references for jobs that the candidates have been interviewed at, as well as candidate references, job references, candidates' first names, candidate middle names, candidate last names, and interview date. The database 6 may, in an alternative embodiment, include details of any recorded post-interview activity, and the data processor may be arranged to determine whether the type of activity recorded is nevertheless indicative of activity which is sufficient to show that the recruitment company has been bypassed.

The (client) business/contact database 8 contains valid email addresses and associated individuals names of client companies. This may include more than one entry for each company. As will be described below, the data processor 5 acts on the data and generates an inferred email address for candidates. For example, the database 8 includes full email addresses, for example 'john.smith@domain.com', with which is associated the individual's name, 'JOHN SMITH'. Each such entry is linked to an identifier which is indicative of a respective client company. It will be appreciated that multiple email addresses may be stored and associated with a single client company. The email addresses are sourced at the time of taking instructions from the client company to seek the recruitment company's services. For example, the email address may relate to an individual of the client company which instructed the recruitment company.

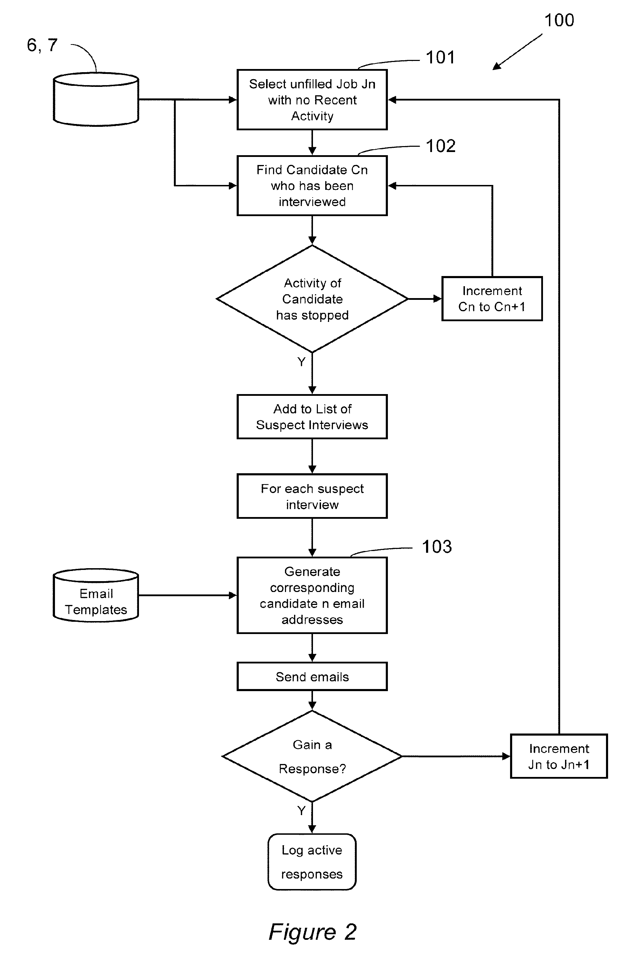

As can be seen from Figure 1, the data processor includes various functional modules, namely correlation, email address generation, email generation and response monitoring. The flow chart of Figure 2 summarises the steps performed by the data processor and its functional modules. At step 101, the data processor 3 initially interrogates the database 7 to identify those jobs which are marked as closed, but which there is no recorded indication that the recruitment company was involved in completion of filling the vacancy. At step 102, the data processor interrogates the database 6 to identify those candidates who are indicated as having been to interview, but for whom there is no recent, or insufficient, recorded recruitment activity updates. The results returned from steps 101 and 102 and then correlated, by way of the associated references on each database, to determine the candidates and roles which are suspected as having been filled in contractual breach of the terms of the recruitment company. The results of this is a list of suspect interviews, which then be investigated further as follows.

At step 103, the data processor is operative to using the client company references from the initial steps, calls, from the database 12, the known valid email addresses of the client companies, together with the associated full names of the individuals to whom the emails belong. The processor then applies analysis and parsing processing steps for the or each email address of the client company, and to identify a local portion of the email address (for example in 'john.smith@domain.com', the local part would be 'john.smith'. The data processor then compares the local part to the individual's full name, and thereby deduces a syntax/format of emails of the client company. The data processor then identifies the domain part of the address, in this example, 'domain.com'. The data processor has thereby understood the syntax rules of the client company's emails. If multiple client company email addresses are available for a client company, the data processor can ensure that deduced rules are validated over a number of examples. Using the email syntax rules deduced, the data processor is operative to generate an email address using the name of the candidate in question, as applied to the rules. An email address with the candidate's name in the syntax of the client company has now been generated.

The data processor is then operative to pull email wording template from a database 12 of such templates, and to create a test email addressed to the deduced email address.

At step 104, the data processor is then operative to send all such emails via the interface 5, and over the communications network 2. On sending the emails, the data processor causes an identifier to be created to associate the generated email address with the client company.

Once sent, the data processor monitors and logs, via the interface 5, emails received in response to the test emails. If a response is received this may be indicative of the email address generated being an address which is in use, which in turn may be indicative of the candidate in question having been offered and accepted the role at the client company in breach of the contractual terms of the recruitment company. The responses are logged to enable follow-up action to be taken.

The data processor may be arranged to analyse/parse any email responses received and to classify the response into one of a plurality of response types. For example, emails received via the interface 5 may be parsed to determine whether the sender's email address contains at least the domain part of a previously sent email address, or may determine whether an exact test email address of a received email is present. The data processor compares the email address of received email to email addresses of test emails sent. If there is identity between the address of the received email and an address of a test email, the processor can then associate that event with an identifier associated with the test email. If for example, only the domain part of the received email matches one or more test email addresses, then the processor is arranged to categorise this accordingly, and generate an association to the particular test emails (which can then be analysed subsequently to determine what action is taken, if any).

It will be apparent from the above that we have realised an innovative way in which to use the combined informational resource of the various databases, and to thereby be able to generate and output test emails which can be used to identify potential breaches requiring further information. The extent of manual intervention in the phase of identifying potential breaches is significantly reduced, and effectively eliminated, due to the way in which the processor can interrogate the different databases, and correlate the data to deduce suspected breaches. Stated broadly, the apparatus completes a two-stage operation in which suspected breaches are not only identified, but also are then investigatively actioned. Whilst, ultimately, human input will be required to pursue any identified potential breaches with the parties concerned, the procedure to that point is streamlined and efficient, provided by the above technological solution, to the extent that the overall process (including any human intervention) is made more efficient. In the absence of the invention, the volume of potential breaches means it would be both time consuming and unfeasible to attempt to identify and follow-up on each. The current invention ensures that a user is able to investigate a larger number of potential breaches than without the invention, meaning, in all likelihood, that a larger number of actual breaches could be identified.

It will be appreciated the features disclosed in the detailed description may serve, either individually or in combination, as the basis of an amendment to qualify or supplement features recited in the claims.

## Claims

1. An investigative monitoring apparatus for determining deduced changes in status of role opportunities, the apparatus comprising a data processor and a communications interface arranged to send and receive emails, the data processor configured to monitor stored role candidates' details for a first criterion of an indication of a paucity of recorded recruitment activity updates of the candidates since a date of interview and the data processor arranged to monitor for a second criterion of a change relating to stored details of role opportunities indicative of one or more of said role opportunities ceasing to be open, and the data processor arranged to identify any such candidates and role opportunities which meet the first and second criteria, and the data processor arranged to generate for each such candidate an inferred email address which is in conformity with an email address syntax of a client party which interviewed the or each candidate, and the data processor arranged to send a test email using an email address so generated to said client party from the interface, and the data processor arranged to monitor for a response from the test email.

2. Apparatus as claimed in claim 1 in which the data processor arranged to interrogate a database system when assessing the first and second criteria, on which database system candidates' details and role opportunity details are stored.

3. Apparatus as claimed in claim 1 or claim 2 in which the data processor arranged to correlate the matches meeting the first criterion with the matches meeting the second criterion.

4. Apparatus as claimed in any preceding claim in which the data processor arranged to determine for the first criterion those role opportunities which are indicated as closed but which do not have an associated stored indication that the role opportunity was legitimately filled.

5. Apparatus as claimed in any preceding claim in which the data processor arranged to generate an inferred email address of a client party by parsing or analysing at least one known valid email address of the client party.

6. Apparatus as claimed in claim 5 in which the data processor arranged to determine an email syntax by analysing a plurality of known valid email address associated with the client party.

7. Apparatus as claimed in claim 5 or claim 6 in which the data processor arranged to analyse the known valid email address by determining a local element of the email address syntax and a domain element of the email address, and generating a local address element based on a name details of a candidate identified as meeting the first criterion, and incorporating this with the domain element.

8. Apparatus as claimed in any of claims 5 to 7 in which the data processor arranged to learn the syntax of a client party email address by comparing a name of an individual of the client party to his or her email address.

9. Apparatus as claimed in any preceding claim in which the data processor generates and stores an association with the test email generated to the respective role opportunity and the candidate.

10. Apparatus as claimed in any preceding claim in which the data processor arranged to monitor for responses from the emails sent by determining whether a received email is sent from an email address which corresponds to a generated email address used for a test email which has been sent.

11. Apparatus as claimed in any preceding claim in which the data processor is configured to compare individuals' names associated with the known valid email address of the client party.

12. Apparatus as claimed in any preceding claim in which the data processor arranged to recognise and categorise different types of response from test emails sent using the generated email addresses.

13. Apparatus as claimed in any preceding claim in which the data processor is arranged to determine whether the first criterion is met within a predetermined time.

14. Apparatus as claimed in claim 13 in which the data processor is configured to determine if the first criterion is met within a predetermined time from an interview date.
